# EUROPEAN PATENT SPECIFICATION

(11) **EP 3 454 977 B1**
(45) Date of publication and mention of the grant of the patent: **09.02.2022**
(21) Application number: 16728731.7
(22) Date of filing: 13.05.2016
(51) Int. Cl.: B01D 65/08, B06B 1/06, B01D 29/72

(54) **A VIBRATION SYSTEM AND A FILTERING PLATE FOR FILTERING SUBSTANCES**
SCHWINGUNGSSYSTEM UND FILTRIERUNGSPLATTE ZUR FILTRIERUNG VON SUBSTANZEN
SYSTÈME DE VIBRATION ET PLAQUE FILTRANTE POUR LA FILTRATION DE SUBSTANCES

(43) Date of publication of application: 20.03.2019
(73) Proprietor: Acondicionamiento Tarrasense, 08225 Terrassa Barcelona (ES); Jozef Stefan Institute, 1000 Ljubljana (SI)
(72) Inventor: FACCINI, Mirko, 08225 Terrassa (ES); MORILLO MARTÍN, Diego, 08225 Terrassa (ES); AMANTIA, David, 08225 Terrassa (ES); KUSCER HROVATIN, Danjela, 1000 Ljubljana (SI); BELAVIC, Darko, 1000 Ljubljana (SI); ROJAC, Tadej, 1000 Ljubljana (SI)
(74) Representative: Gallego Jiménez, José Fernando
(86) International application number: PCT/IB2016/052766
(87) International publication number: WO 2017/194999

(56) References cited:
- EP-A1- 1 652 678
- WO-A1-2014/071380
- JP-A- 2000 189 769
- US-A- 4 253 962
- US-A- 4 904 394
- US-A- 5 160 616
- US-A1- 2008 180 500

## Description

### Technical Field

The present invention is directed, in general, to filtration systems. In particular, the invention relates to a vibration system for filtering substances having a filter plate and one or more vibration actuators, and to a filter plate for such a vibration system.

### Background of the Invention

Membrane filtration is used for separation and purification processes in industry, including food, pharmaceutical, biotechnology, medical, mining, chemical and others. Two different filtration configurations are possible: dead-end configuration and tangential (cross)-flow configuration.

In dead-end configuration, a concentrate flows through the porous material, while in a cross-flow configuration, the concentrate flows in a direction parallel to the plane of the filtration and a permeate passes through the porous material. Driving force for the process is a pressure difference between upper and bottom side of the porous material. The aforementioned types of filters are generally not self-cleaning and consequently resulted in the fouling which increases the power consumption and reduces the filter lifespan. Filters are cleaned and reused or replaced but this involve considerable expense in terms of material and production downtime cost as well as in terms of the environmental hazards.

To overcome fouling of the membrane during the operation, an ultrasonic vibration produced by piezoelectric actuators has been used. Systems for non-destructive cleaning of reverse osmosis and ultrafiltration membranes using the ultrasound transducers located outside the pressure vessel (referred to as configuration 1) or integrated in the ceramic support inside the pressure vessel (referred to as configuration 2) are described in US Patent 4,253,962. The systems operated in cross-flow configuration. In configuration 1 the membrane was placed in the vessel and the transducers were placed in outer housing of the vessel. Transducers were electrically driven using frequency modulating sweep. The vibration of the transducers caused the turbulence in the media or caused the vibration of the membrane itself, means the contaminants were removed from the membrane surface. The transducers were designed in such way that it moved back and forth along the length of the vessel. Transducers driven via frequency modulating sweep and their moving along the vessel prohibited the formation of standing waves and decreased the intensity of the cavitation at local areas which can both destroy the membrane. In configuration 2 the transducers were located inside the vessel means part of porous core was constructed from ultrasound transducers. The porous core supported the functional membrane and served for cleaning the fluid while the transducers operated exclusively as the vibratory source. Transducers can be driven either at an optimal frequency or via frequency modulating sweep.

A method for selective filtering of fluid via vibration of the porous piezoelectric filter body was described in US Patent 4,904,394. The piezoelectric material was porous ceramic such as lead zirconate titanate (PZT) or polymer such as polyvinylidene fluoride (PVDF). In one embodiment the filter was a porous PZT disc with electrodes partially covering the disc surface. Applying a periodic voltage to the electrodes caused the vibration of the piezoelectric disc and induced displacement in the plane of planar surface of the disc. In another embodiment the annularly-patterned piezoelectric material with porous electrodes on the both, top and bottom surface, was bonded onto the conventional filter membrane. By applying the periodic voltage to the electrodes, the piezoelectric may vibrate and the vibrations may be transforms to the filter membrane. In further embodiment the porous piezoelectric disc with porous electrodes acts as a support for conventional filter membrane and is driven as already explained.

In the cited US Patent 4,253,962 the transducers were included in the porous support and were in contact with different materials including liquid or permeate. The fluid can be aggressive (temperature a few tens of °C, extremely low or high pH, harsh organic component), thus the transducer, electrodes, electrical contacts and other constructing parts of the transducer can be damaged due to the lack of chemical, mechanical and thermal stability. In case of electrically conductive fluid, the transducer shown in cited US Patent 4,253,962 is inoperative. To work properly, the piezoelectric material, electrodes, electrical contacts and other constructing parts of the transducer have to be completely isolated from the conductive fluid for the entire lifetime of the system. The fluid can be aggressive (temperature a few tens of °C, extremely low or high pH, harsh organic components) means damaging the isolating material. Thus the isolating material has to possess high chemical, mechanical and thermal stability.

In cited US Patent 4,904,394 the porous piezoelectric material and the electrodes were in direct contact with fluid means the fluid penetrate through the porous structure of piezoelectric. In this embodiment, the system is applicable only for electrically non-conductive media. In case of aggressive fluid the porous piezoelectric material and electrodes can be damaged which disable the filtering/purification due to the lack of chemical stability of the materials in the media and/or due to mechanical damaging of the filter. Dissolution of metal ions from PZT, in particular lead ions, in aqueous media at low pHs inferiors the quality of the treated fluid which is highly undesirable.

The mechanical properties of piezoelectric ceramic such as PZT are lower than that of conventional supporting ceramic materials such as Alumina (fracture toughness KIC of Alumina is 3-5 MPa m^{0.5} and of PZT 0.8-1 MPa m^{0.5}). The KIC for the porous PZT is lower than given value. So the porous PZT shown in the cited US Patent 4,904,394 as self-standing filter and as a support for the conventional membrane can mechanically break at much lower forces means operating pressures than Alumina.

The piezoelectric properties of porous piezoelectric materials are lower than that of dense material. So the vibration efficiency resulted from of porous piezoelectric described in the cited US Patent 4,904,394 is lower compare to that of the dense piezoelectric.

Besides the above-mentioned US patents, International patent application WO-A1-2014071380 provides apparatuses and methods for preventing or otherwise reducing scaling and fouling of a membrane using ultrasonic vibrations. One example method disclosed in said International patent application involves: directing a solution to a membrane of a membrane assembly, where the membrane passes a solvent of the solution through the membrane at a first rate, and where the membrane prevents at least some of a solute of the solution from passing through the membrane; and causing a piezoelectric material that is physically coupled to the membrane to produce ultrasonic waves directed at the membrane, where the ultrasonic waves induce oscillations in at least a portion of the membrane and thereby the solvent of the solution passes through the membrane at a second rate that is greater than the first rate.

US Patent 5,160,616 relates to a filtering apparatus for the separation of microparticles such as bacteria having two planar sheets each with an array of laser drilled or etched pores. One or both of the sheets can be displaced relative to the other under feedback control to bring the pores into greater or lesser register. The effective pore size is thus varied to provide controlled selectivity.

US Patent 8,172,389 relates to a filter including a filter plate provided with a through holes formation portion in which a plurality of through holes is formed, a ring-shaped piezoelectric layer arrangement portion on an upper surface of which a piezoelectric layer is formed, and a circular-shaped fixed portion fixed to a tube, an electrode formed almost on an entire area on an upper surface of the piezoelectric layer, and a protective layer covering the piezoelectric layer and the electrode. When a driving electric potential is applied to the electrode, an electric field is generated in the piezoelectric layer, and the piezoelectric layer is contracted to deform the filter plate. With the deformation of the filter plate, the filter vibrates, and it is possible to release impurities and air bubbles in a liquid trapped in the filter.

Further filtering systems are also disclosed in the scientific Publications [1], [2] and [3].

### References:

[1] Production and characterization of piezo-electric membranes (2011). H.G.L. Coster, T. Darestani Farahani, T.C. Chilcott. Desalination. Volume 283, 1 December 2011, Pages 52-57.
[2] Piezoelectric membranes for separation processes: operating conditions and filtration performance (2013). M.T. Darestani, H.G.L. Coster, T.C. Chilcott. Journal of Membrane Science. Volume 435, 15 May 2013, Pages 226-232.
[3] Cleaning of particle-fouled membranes during cross-flow filtration using an embedded ultrasonic transducer system. (2006). Mikko O. Lamminen, Harold W. Walker, Linda K. Weavers. Journal of Membrane Science. Volume 283, Issues 1-2, 20 October 2006, Pages 225-232.

### Description of the Invention

The vibration system according to the invention is defined in claim 1.

Embodiments of the present invention provide according to a first aspect a vibration system for filtering substances including a fluid such as a liquid, said vibration system comprising, as commonly in the field: a filter plate made of a porous material having two sides, an upper side and a lower side; and one or more vibration actuators physically coupled to said filter plate and driven, through electrical interconnections and electrodes of the vibration system, with a driving voltage to vibrate said filter plate at a given frequency and to provide a displacement in a plane of said filter plate.

The filter plate and the one or more vibration actuators are assembled in a housing with clamping means such as circular O-rings, for instance silicone-based O-rings, providing an hermetic seal. Besides, a periphery of the housing delimits a filtering area, being the one or more vibration actuators located in or nearby said filtering area (depending on the embodiment of the proposed vibration system).

The porous material of the filter plate is a ceramic material. Although numerous porous materials are also potentially applicable such as polymers, metals or metal oxides, a ceramic is preferred due to its superior chemical, thermal and mechanical stability. Ceramic is formed by sintering at high temperatures. To improve the functionality and selectively of the porous material, the surface of the filter plate can be modified using procedures such as physical adsorption or chemical attachment of various compounds (polymers, nanoparticles, etc.) hence producing a robust and selective functional membrane.

According to the invention, the ceramic material may include Alumina (Al₂O₃), or Silica (SiO₂), or Titania (TiO₂), or Zirconia (ZrO₂), or even combinations thereof.

In addition, the cited frequency is comprised in a range between 100 Hz and 100 kHz, and the cited displacement has an amplitude between 0.01 and 2 µm.

The proposed vibration system can operate either in cross-flow configuration or in dead-end configuration for filtering said substances.

The vibration system further comprises an isolating protective layer (e.g. a fluid-protected layer (FPL)) which is deposited on an area of the filter plate outside the housing. The protective layer can be made of ceramic-glass composite, glass, polymer, or any other materials. The protective layer can be deposited onto the filter plate using paint brush, dipping, or technologies such as printing, examples being screen printing, inkjet printing and pad printing. In addition, the protective layer is formed in a defined pattern allowing certain area of functional membrane to be excluded from the protective layer covering. By suitable control of the deposition and curing processes, the protective layer can have defined thickness and density which disable the passage of fluid through the protective layer.

Preferably, the one or more vibration actuators are piezoelectric actuators including modified lead zirconate titanate (PZT); modified bismuth titanate (BT); and modified potassium sodium Niobate (KNN). Piezoelectric actuators have the ability to generate voltage in response to an applied mechanical stress (direct piezoelectric effect) or generate a mechanical stress in response to an applied electric filed (inverse piezoelectric effect). In present invention, the vibration actuators preferably use the inverse piezoelectric effect.

The preferred piezoelectric material is modified PZT for the reason that it is one of the most effective piezoelectric with high dielectric constant and high piezoelectric constants. Such materials are commercial available. The piezoelectric materials are mostly fabricated from metal-oxides sintered at high temperature into the solid body. On a top and a bottom of the piezoelectric materials, electrodes are formed. Then piezoelectric materials are polarized in an electric field means forming a vibration actuator. According to the invention, the vibration actuators may be located at said top side of the filter plate or at said bottom side of the filter plate or at the both sides. Vibration actuators in the form of pellets are adhered to the filter plate. The vibration actuators may be fixed in the filter plate using an adhesive or sticking agent. Likewise, the one or more vibration actuators could be a mechanical driver, e.g. an electromotor. However, this particular implementation of the vibration actuators would only be possible for a vibration system working at a low frequency range (lower that kHz).

According to an embodiment, the vibration system comprises four vibration actuators located at a corner of the filter plate in one of said two sides of the filter plate. According to another embodiment, the vibration system comprises eight vibration actuators located at a corner of the filter plate in both of said two sides of the filter plate. According to yet another embodiment, the vibration system comprises a single vibration actuator which is located in this case at the center of the filter plate.

The vibration system according to an embodiment further comprises conductors including electric wires for the electrical interconnections. The conductors can be deposited onto the protective layer or integrated (buried) therein. The preferred technology for depositing is printing such as screen printing, inkjet printing and pad printing. The conductors for the electrical interconnections can be fired at temperatures not higher than 1000 °C. The electrical contact between the conductors and the vibration actuator(s) are made using a wire, examples being copper and platinum.

Present invention therefore provides a vibration system for filtering substances preferably fluids, which can be self-cleaned thanks to the vibration of the filtering plate with the vibration movement made by the vibration actuators, while minimizes the contact of different elements with the media to be filtered, in particular excluding the contact of the vibration actuator(s) and electrical interconnections with the media, and while avoids the direct contact of the filter plate with the electric current.

### Brief Description of the Drawings

The previous and other advantages and features will be more fully understood from the following detailed description of embodiments, with reference to the attached figures, which must be considered in an illustrative and non-limiting manner, in which:
Fig. 1 is an isometric view of the proposed vibration system for filtering substances according to an embodiment. In this embodiment, the vibration system consists of a filter plate of a porous material and four vibration actuators assembled in a housing of a tubular cylindrical shape.
Fig. 2A is a cross-section view through diagonal A-A of the embodiment of Fig. 1. The filter plate and the vibration actuators are assembled in the housing and tight with clamping means. The clamping means define a filtering area of the vibration system.
Fig. 2B is a top-view of the embodiment of Fig. 1.
Fig. 3 is a cross-section view illustrating the assembling of bulk vibration actuators onto the filter plate, according to an embodiment of the present invention.
Fig. 4 is a cross-section view illustrating the assembling of thick-film vibration actuators onto the filter plate, according to another embodiment of the present invention.

### Detailed Description of the Invention and of Preferred Embodiments

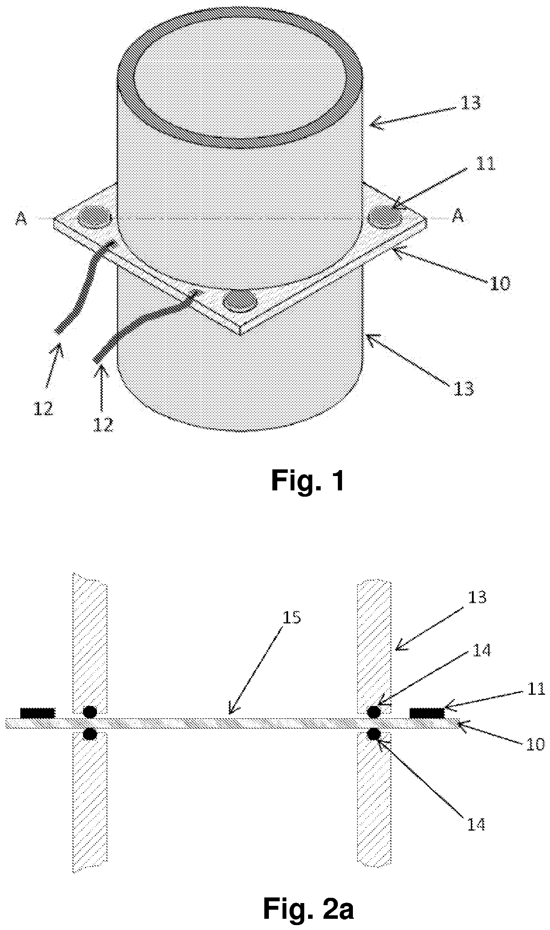

Figs. 1 and 2a-2b illustrates an embodiment of the proposed vibration system for filtering substances preferably a fluid such as a liquid, not limitative as other types of fluids could be also possible such as gases of vapors. The proposed vibration system can operate either in cross-flow configuration or in dead-end configuration for filtering the substances.

According to the embodiment disclosed in said figures, the vibration system includes a filter plate 10 made of a ceramic material. The ceramic material according to the invention can be made of Aluminium (Al), Silicon (Si) Titanium (Ti) or Zirconium (Zr) oxides among other ceramic materials. Even combinations of different ceramic materials may be also used. In some other alternative cases, Tin (Sn) or Hafnium (Hf) oxides may be also used.

The filter plate 10 can be circular, rectangular or can have other different shapes.

In the particular embodiment of figures 1 and 2a-2b, the filter plate 10 (or functional membrane) is made of Alumina with porosity between 1 and 35 % and a pore size between 1 and 20 µm. The upper side surface of the filter plate 10 is covered with a 30-µm thick Alumina layer with a grain size between 0.1 and 2 µm and porosity between 20 and 40 %. In this particular case the filter plate 10 has a rectangular shape with a dimension typically of 50 mm × 50 mm and a thickness typically between 0.6 and 1.0 mm.

In addition, four vibration actuators 11 and two isolated wires 12 for the electrical interconnections to the excitation (driving) voltage are also included in the vibration system. The filter plate 10 and the four vibration actuators 11 are assembled in a housing 13. The housing 13 according to this particular embodiment is formed of cylindrical tubes, not limitative as any other shapes are also possible without departing from the scope of protection of present invention, made of glass or polymer or metal or ceramic. The two tubes are pressed together using a screw thread which apply sufficient pressure to a clamping means 14 such as O-rings to make a fluid-tight seal (other clamping means can be alternatively used). The O-rings can be made of silicone caoutchouc.

The four vibration actuators 11 are placed outside a filtering area 15. Vibration actuators 11 can be discs, rectangles, rings or any other shape. In this particular case vibration actuators 11 are discs placed in the corners of the filter plate 10. The vibration actuators 11 are preferably manmade from donor-doped lead zirconate titanate (PZT). The vibration actuators 11 are in the form of disc typically with a diameter 6 mm and a thickness 0.6 mm. PZT has a density higher than 90 % of the theoretical density.

For further sealing protection, the area of the filter plate 10 outside the housing 13 is protected with an isolating protective layer 17, preferably a fluid-protected layer (FPL). In this particular case FPL is made of thick-film ceramic-glass composition.

In accordance with another embodiment of the present invention, in this case not illustrated for simplicity of the figures, the proposed vibration system for filtering substances comprises eight vibration actuators 11 located at a corner of the filter plate 10 in both of said two sides of the filter plate 10. In accordance with another embodiment, not illustrated either, the proposed vibration system comprises a single vibration actuator 11. In this case, the single vibration actuator 11 is located in the center of the filter plate 10 and not in the corners, wherein said vibration actuator 11 has electrical connections through the filter plate 10, not interfering with the material to be filtered. Other different configurations of vibration actuators 11 (i.e. other different number of vibration actuators) can be alternatively used in the proposed vibration system. For instance the vibration system may comprise two vibration actuators 11, three, six, or even a higher number of vibration actuators 11.

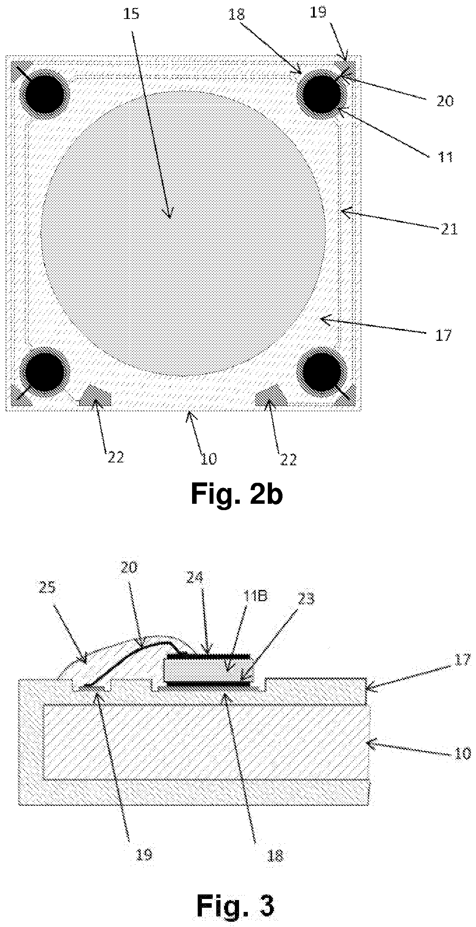

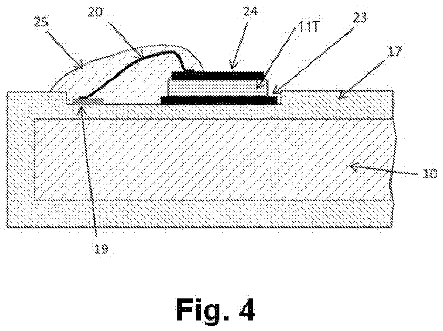

According to the invention, in any of the above-described embodiments, the vibration actuator(s) 11 may comprise bulk (termed as 11B, see Fig. 3) or thick-film (termed as 11T, see Fig. 4) vibration actuators. The thick-film actuators 11T are preferably made by screen-printing and firing of thick-film piezoelectric paste and conductive paste, while the use of bulk piezoelectric material 11B continues with the fabrication of electrodes, device bonding, wire bonding and glop-top protection. Addition to different fabrication processes the main advantage of thick-film actuators 11T in comparison with bulk piezoelectric actuators 11B is integration and the main disadvantage is lower piezoelectric properties.

With reference now to Fig. 3, therein it is illustrated an embodiment of an assembling of a vibration actuator 11 onto the filter plate 10. In this particular embodiment, the vibration actuator 11 is made from bulk piezoelectric material. Vibration actuator 11B is mounted outside the filtering area 15 on the isolating protective layer 17. The top surfaces and the bottom surface of the vibration actuator 11B are covered by electrodes 23 and 24, respectively, preferably of gold. The top electrode 24 is connected to a wire-bonding pad 19 by a wire 20, which is protected by glob-top 25. All wire-bonding pads 19 and all actuator-bonding pads 18 are connected via buried electrical interconnects 21, wire-soldering pads 22 and the two isolated wires 12 to the excitation (driving) voltage.

Vibration actuator 11B is poled in axial direction. By applying a periodic voltage to the electrodes 23, 24 the vibration actuator 11B vibrates and the vibrations are transferred to the filter plate 10. The electrical driving system consists of a function generator, which generates alternating voltage signals of different amplitudes and frequencies, and a voltage amplifier used to amplify this voltage signal. Using a voltage amplifier, the driving voltage amplitudes may be up to, e.g., 200 V. The driving frequencies are typically between 100 Hz and 100 kHz and can be applied in a discrete or continuous mode. In the discrete mode, a driving frequency is used that matches or it is close to a selected displacement resonance frequency of the vibrating system. In the continuous mode, the piezoelectric is driven by a continuous frequency sweep, e.g., between 0.1 and 100 kHz, which thus activates all the resonance modes of the filter plate 10 in a specific frequency range. The mechanical displacement of the filter plate 10 depends on the driving conditions and it may be from nanometers up to the micrometer range.

With reference now to Fig. 4, therein it is illustrated an embodiment of the structure of a thick-film vibration actuator 11T onto the filter plate 10. Thick-film vibration actuators 11T are mounted outside the filtering area 15 on the isolating protective layer 17. The top surfaces and the bottom surface of the thick-film vibration actuator 11T are covered by conductor, which act as bottom and top electrodes 23 and 24, respectively, of the thick-film vibration actuator 11T. The top conductor 22 is connected to a wire-bonding pad 19 by a wire 20, which is protected by glob-top 25. All wire-bonding pads 19 and all bottom electrodes 23 are connected via buried electrical interconnects 21, wire-soldering pads 22 and the two isolated wires 12 to the excitation (driving) voltage.

Following three different particular examples embodiments for constructing the proposed filtration system are detailed. Examples 1 and 2 correspond to the case in which four vibration actuators were used, whereas example 3 corresponds to the case in which a single vibration actuator was used.

### Example Embodiment 1:

The filter plate 10 is a square-shaped Alumina plate with dimensions 50 mm × 50 mm and a thickness of 0.8 mm. It has a density of 3 g/cm³ and a mean pore size of 4 µm. The circularly shaped filtering area 15 is located in the center of the filter plate 10. The diameter of the filtering area 15 is 40 mm (see Fig. 2b). The entire region of the filter plate 10 excluding the filtering area 15 was covered by the FPL 17. The FPL 17 was made of commercially available thick-film ceramic-glass composition. The FPL 17 was screen printed onto the filter plate 10. Three passes were performed. Each individual pass was fired in a box furnace at 850 °C for 10 minutes with a heating and a cooling rate of 10 °C/min in a flow of air. Onto the FPL 17 one pass of a silver paste was screen printed in a pattern. The paste was fired in a box furnace at 850 °C for 10 minutes with a heating and a cooling rate of 10 °C/min in a flow of air. The entire region of the filter plate 10, excluding the filtering area 15 and the actuator-bonding pads 18, was screen printed with a paste of thick-film ceramic-glass composition as FPL 17. One pass was performed. The layer was fired in a box furnace at 850 °C for 10 minutes with a heating and a cooling rate of 10 °C/min in a flow of air. The edge of the filter plate 10 was additionally covered with the thick-film ceramic-glass composition using a 'paint brush' method. Two layers were deposited and after each deposition the layer was fired in a box furnace at 850 °C for 10 minutes with a heating and a cooling rate of 10 °C/min in a flow of air.

The vibration actuators 11 were fabricated as follows. Nb-doped PZT powder with a nominal composition Pb(Zr_{0.53}Ti_{0.47})_{0.98}Nb_{0.02}O₃ (PZT Nb) was synthesized from PbO, ZrO₂, TiO₂, and Nb₂O₅ by solid-state synthesis. The oxides were homogenized in a planetary mill for 2 h. After drying, the mixture was calcined at 900°C for 1 h, remilled and recalcined. After a second calcination, the powder was milled in an attritor mill for 4 h and dried. The powder was pressed into discs with a diameter of 8 mm and a thickness of 10 mm uniaxially with a pressure of 50 MPa and after that isostatically with a pressure of 300 MPa. The discs were sintered in a chamber furnace at 1275 ºC for 2 hours with a heating and a cooling rate of 5 °C/min. Sintering was performed in air in a PbO-rich atmosphere provided by a PZT Nb powder. The sintered samples were cut in the discs with a thickness of about 1 mm by a diamond saw and afterwards plan-parallel polished to the thickness of 0.6 mm. The discs were annealed in air at 600 °C for 1 h with a heating rate of 5 °C/min and a cooling rate of 1 °C/min.

Onto the top and the bottom surface of the discs the gold electrodes 23, 24 were sputtered. The discs were poled in an oil bath at 160 °C for 15 min in electric field strength of 30 kV cm⁻¹. The PZT Nb discs mean actuators have a density of 7.7 g/cm³ and a grain size from 1 to 10 micrometers, the dielectric constant of 1500 (at room temperature), the dielectric losses of 0.017 (at 1kHz and at room temperature), the d₃₃ 470 pC/N, the remanent polarization of 47 µC/cm² and the coercive field of 18 kV/cm.

The vibration actuators 11 were attached on the actuator-bonding pads 18, using an electrically conductive two-component epoxy adhesive. The top gold electrode 24 was electrically connected with the wire-bonding pad 19 on the filter plate 10 with a copper wire 20, which was glued at its ends and protected by glob-top 25 (see Fig. 3).

The filter plate 10 with integrated vibration actuators 11 was clamped in the housing 13 using circular silicone-based O-rings 14 with an inside diameter of 40.5 mm and a width of O-ring of 3 mm. The O-ring 14 has a durometer of SHORE 7OA. The O-ring clamping was 0.2 Nm.

The vibration actuators 11 were driven with a sinusoidal excitation voltage of 38 VPP and a frequency in the range from 100 Hz to 100 kHz. The displacement of the filter plate 10 in its center was measured using a fiber optic sensor. The displacement at resonance frequency of 5050 Hz was 880 nm.

### Example Embodiment 2:

The filter plate 10 was a square-shaped Alumina plate with dimensions 50 mm × 50 mm, a thickness of 0.35 mm with a purity of ≥ 99.6 %. The conductive lines of electrical interconnections 21 were made by the use of Ag/Pd paste. The paste was screen-printed (one pass) on the filter plate 10 in a pattern, and then fired in a box furnace at 850 °C for 10 minutes with a heating and a cooling rate of 33 °C/min in a flow of air. The bottom electrodes 23 were made by the use of Au paste. The paste was screen-printed (two passes) on the filter plate 10 in a pattern (see Fig. 2b), and then fired in a box furnace at 900 °C for 10 minutes with a heating and a cooling rate of 35 °C/min in a flow of air. The circularly shaped filtering area 15 is located in the center of the filter plate 10. The diameter of the filtering area 15 is 40 mm. The entire region of the filter plate 10 excluding the filtering area 15 and bottom electrodes 23 was screen printed with a paste of thick-film ceramic glass composition as the FPL 17. The layer was fired in a box furnace at 850 °C for 10 minutes with a heating and a cooling rate of 33 °C/min in a flow of air.

The vibration actuators 11 were fabricated as follows. Nb-doped PZT powder with a nominal composition Pb(Zr_{0.53}Ti_{0.47})_{0.98}Nb_{0.02}O₃ with 2 mol % of excess PbO (PZT Nb PbO) was synthesized as described in Embodiment 1. The PZT Nb PbO thick-film paste for the screen printing was prepared from 60 wt. % of PZT Nb powder that was mixed with 40 wt. % of organic vehicle, comprising a-terpineol, ethylcellulose and [2-(2-butoxy-ethoxy-ethyl)] acetate. The paste was screen-printed (one pass) on bottom electrodes 23 on filter plate 10 in a pattern. The layer was fired in a box furnace as follows: from room temperature (RT) with a heating rate 1 °C/min to 450 °C for 1 h, then with a heating rate of 5 °C/min to 900 °C for 2 h, afterwards cool down to RT with a cooling rate of 5°C/min. Onto this layer five passes of PZT Nb PbO paste was screen printed. After each printing pass the layer was dried at 105 °C. All five layers together were fired in a box furnace as follows: from room temperature (RT) with a heating rate 1 °C/min to 450 °C for 1 h, then with a heating rate of 5 °C/min to 950 °C for 2 h, afterwards cool down to RT with a cooling rate of 5°C/min. The resulting PZT Nb PbO thick film structure had a thickness of about 60 µm.

Onto the top surface of the PZT Nb PbO thick film structure 11T the gold top electrodes 24 were sputtered. The PZT Nb PbO thick film structures 11T together with bottom 23 and top 24 electrodes means thick-film actuators, which were poled in an oil bath at 160 °C for 15 min at an electric field strength 30 kV cm⁻¹.

The top electrode 24 was electrically connected with the wire-bonding pad 19 on the filter plate 10 with a wire 20, which was glued at its ends and protected by glob-top 25 (see Fig. 4).

The filter plate 10 with integrated vibration actuators 11 was clamped in the housing 13 using circular silicone-based O-rings 14 with an inside diameter of 40.5 mm and a width of 3 mm. The O-ring was spherical and has a durometer of SHORE 7OA. The O-ring clamping was 0.2 Nm.

The vibration actuators 11 were driven with a sinusoidal voltage of 38 VPP and a frequency in the range from 1 kHz to 100 kHz. The displacement of the FM in its center was measured using a fiber optic sensor. The displacement at a resonance frequency of 1250Hz was 205 nm.

### Example Embodiment 3:

The filter plate 10 was a square-shaped Alumina plate with dimensions 50 mm × 50 mm and a thickness of 0.8 mm. It has a density of 3 g/cm³ and a mean pore size of 4 µm. The circularly shaped filtering area 15 is located in the center of the filter plate 10. The diameter of the filtering area 15 is 40 mm (see Fig. 2b). The entire region of the filter plate 10 excluding the filtering area 15 was covered by the FPL 17. FPL 17 was made of commercially available thick-film ceramic-glass composition. The FPL 17 was screen printed onto the filter plate 10. Three passes were performed. Each individual pass was fired in a box furnace at 850 °C for 10 minutes with a heating and a cooling rate of 10 °C/min in a flow of air. Onto the fired dielectric one pass of a silver paste was screen printed in a pattern (see Fig. 2b). The paste was fired in a box furnace at 850 °C for 10 minutes with a heating and a cooling rate of 10 °C/min in a flow of air. The entire region of the filter plate 10 excluding the filtering area 15 and actuator-bonding pads 18 was screen printed with a paste of thick-film ceramic-glass composition as the FPL 17. One pass were performed. The layer was fired in a box furnace at 850 °C for 10 minutes with a heating and a cooling rate of 10 °C/min in a flow of air. The edge of the filter plate 10 was additionally covered with the paste of thick-film ceramic-glass composition using a 'paint brush' method. Two layers were deposited and after each deposition the layer was fired in a box furnace at 850 °C.

The vibration actuator 11 was fabricated as follows. Fe-doped PZT powder with a nominal composition Pb(Zr_{0.53}Ti_{0.47})_{0.995}Fe_{0.005}O₃ (PZT Fe) was synthesized from PbO, ZrO₂, TiO₂, and Fe₂O₃ by solid-state synthesis. The oxides were homogenized in a planetary mill for 2 h. After drying, the mixture was calcined at 900°C for 1 h, remilled and recalcined. After a second calcination, the powder was milled for 4 h in an attritor mill and dried. The powder was pressed into discs with a diameter of 8 mm and a thickness of 10 mm uniaxially with a pressure of 50 MPa and after that isostatically with a pressure of 300 MPa. The discs were sintered in a chamber furnace at 1275ºC for 2 hours with a heating and a cooling rate of 5 °C/min. Sintering was performed in air in a PbO-rich atmosphere provided by a PZT Fe powder. The sintered samples were cut in the discs with the thickness of about 1 mm by a diamond saw and afterwards plan-parallel polished to the thickness of 0.6 mm. The discs were annealed in air at 600 °C for 1 h with a heating rate of 5 °C/min and a cooling rate of 1 °C/min.

Onto the top and bottom surface of the discs the gold electrodes 23, 24 were sputtered. The discs were poled in an oil bath at 160 °C for 15 min in electric field strength of 30 kV cm⁻¹. The PZT Fe discs mean actuators have a density of 7.8 g/cm3 and a grain size from 1 to 5 micrometers, the dielectric constant of 1100 (at room temperature), the dielectric losses of 0.003 (at 1 kHz and at room temperature), the d33 230 pC/N, the remanent polarization of 18 µC/cm² and a coercive field of 12 kV/cm.

The vibration actuator 11 was attached onto the center of the functional membrane on the actuator-bonding pad 18, using an electrically conductive two-component epoxy adhesive. The actuator and electrical interconnections were water-tight protected from the filtering media. The top electrode 24 was electrically connected with the wire-bonding pad 19 on the filter plate 10 with a wire 20, which was glued at its ends and protected by glob-top 25 (Fig. 3).

The filter plate 10 with the integrated vibration actuator 11 was clamped in the housing using circular silicone-based O-rings 14 with an inside diameter of 40.5 mm and a width of O-ring of 3 mm. The O-ring has a durometer of SHORE 7OA. The O-ring clamping was 0.2 Nm.

The vibration actuator 11 was driven with a sinusoidal excitation voltage of 38 VPP and a frequency in the range from 100 Hz to 100 kHz. The displacement of the filter plate 10 in its center was measured using a fiber optic sensor, The displacement at resonance frequency of 5200 Hz was 110 nm.

Embodiments of the present invention also provide according to a second aspect a filter plate for a vibration system for filtering substances made of a ceramic material such as Alumina, Silica, Titania or Zirconia, etc. or even combinations thereof.

In a preferred embodiment, the ceramic material is made of Alumina (*Al₂O₃*)*.* Dense Alumina has the flexural strength of -400 MPa. With the increasing porosity the flexural strength decreases. For the aforementioned application the flexural strength is about 200 MPa. However, it can be lower, a few tens of MPa (-50 MPa).

## Claims

1. A vibration system for filtering substances, the filtering substances including a fluid and said vibration system comprising:
- a filter plate (10) made of a ceramic porous material, said filter plate (10) comprising two sides an upper side and a lower side;
- electrodes (23, 24); and
- a housing (13),
wherein the filter plate (10) is assembled in said housing (13) with clamping means (14) providing an hermetic seal, a periphery of the housing (13) delimiting a filtering area (15);
**characterized in that** the vibration system further comprises:
- one or more vibration actuators (11) physically coupled to said filter plate (10) and configured to drive, through electrical interconnections (21) and through said electrodes (23, 24), a driving voltage to vibrate said filter plate (10) at a given frequency and to provide a displacement in a plane of said filter plate (10); and
- an isolating protective layer (17) including a fluid-protected layer, FPL, which is deposited on an area of the filter plate (10), outside the housing (13), defining a given pattern allowing certain area of the filter plate (10) to be excluded from the isolating protective layer (17), such that by suitable control of the deposition and curing processes the isolating protective layer (17) can have defined thickness and density which disable the passage of fluid through the isolating protective layer (17),
wherein:
- the one or more vibration actuators (11) are located outside said filtering area (15) on the isolating protective layer 17,
- said given frequency is comprised in a range between 100 Hz and 100 kHz, and
- said displacement has an amplitude between 0.01 and 2 µm.

2. The vibration system of claim 1, Z
wherein the one or more vibration actuators (11) are piezoelectric actuators including modified lead zirconate titanate, PZT; modified bismuth titanate, BT; or modified potassium sodium Niobate, KNN.

3. The vibration system of claim 2, comprising bulk or thick-film piezoelectric actuators.

4. The vibration system of any of previous claims, comprising four vibration actuators located outside of the filtering area (15) in a peripheral part of the filter plate (10), each one of said four vibration actuators being preferably located at a corner of the filter plate (10) in one of said two sides of the filter plate (10).

5. The vibration system of any of previous claims 1 to 3, comprising eight vibration actuators located outside of the filtering area (15) in a peripheral part of the filter plate (10), each one of said eight vibration actuators being preferably located at a corner of the filter plate (10) in both of said two sides of the filter plate (10).

6. The vibration system of any of previous claims 1 to 3, comprising a single vibration actuator (11) located at the center of the filter plate (10), said vibration actuator (11) having electrical connections through the filter plate (10).

7. The vibration system of claim 1, wherein the isolating protective layer (17) is made of at least a ceramic-glass composite, a glass or a polymer of a given thickness.

8. The vibration system of claim 1, comprising conductors (22) including electric wires for the electrical interconnections (21), said conductors being deposited onto the isolating protective layer (17) or integrated therein.

9. The vibration system of claim 1, wherein said ceramic material includes Alumina, Silica, Titania, Zirconia, or combinations thereof.

## Patentansprüche

1. Schwingungssystem für Filtersubstanzen, wobei die Filtersubstanzen ein Fluid einschließen und das Schwingungssystem umfasst:
- eine Filterplatte (10), die aus einem porösen Keramikmaterial gefertigt ist, wobei die Filterplatte (10) zwei Seiten aufweist, eine Oberseite und eine Unterseite;
- Elektroden (23, 24); und
- ein Gehäuse (13),
wobei die Filterplatte (10) in dem Gehäuse (13) mit Klemmmitteln (14) montiert ist, die eine hermetische Abdichtung bereitstellen, eine Peripherie des Gehäuses (13), die einen Filterbereich (15) begrenzt;
**dadurch gekennzeichnet, dass** das Schwingungssystem ferner Folgendes umfasst:
- einen oder mehrere Schwingungsaktuatoren (11), die physisch mit der Filterplatte (10) gekoppelt und konfiguriert sind, um durch elektrische Verbindungen (21) und durch die Elektroden (23, 24) eine Antriebsspannung anzusteuern, um die Filterplatte (10) bei einer gegebenen Frequenz in Schwingung zu versetzen und eine Verschiebung in einer Ebene der Filterplatte (10) bereitzustellen; und
- eine isolierende Schutzschicht (17) einschließlich einer fluidgeschützten Schicht, FPL, die auf einen Bereich der Filterplatte (10) außerhalb des Gehäuses (13) abgeschieden wird und ein gegebenes Muster definiert, das ermöglicht, dass ein bestimmter Bereich der Filterplatte (10) von der isolierenden Schutzschicht (17) ausgeschlossen wird, so dass durch eine geeignete Steuerung der Abscheidungs- und Aushärteprozesse die isolierende Schutzschicht (17) eine definierte Dicke und Dichte aufweisen kann, die den Durchlass von Fluid durch die isolierende Schutzschicht (17) deaktiviert,
wobei:
- der eine oder die mehreren Schwingungsaktuatoren (11) außerhalb des Filterbereichs (15) auf der isolierenden Schutzschicht 17 angeordnet sind,
- die gegebene Frequenz in einem Bereich zwischen 100 Hz und 100 kHz liegt, und
- die Verschiebung eine Amplitude zwischen 0,01 und 2 µm aufweist.

2. Schwingungssystem nach Anspruch 1,
wobei der eine oder die mehreren Schwingungsaktuatoren (11) piezoelektrische Aktuatoren sind, die modifiziertes Bleizirkonattitanat, PZT; modifiziertes Wismuttitanat, BT; oder modifiziertes Kalium-Natrium-Niobat, KNN, umfassen.

3. Schwingungssystem nach Anspruch 2, umfassend piezoelektrische Massen- oder Dickfilmaktuatoren.

4. Schwingungssystem nach einem der vorhergehenden Ansprüche, umfassend vier Schwingungsaktuatoren, die außerhalb des Filterbereichs (15) in einem peripheren Teil der Filterplatte (10) angeordnet sind, wobei jeder der vier Schwingungsaktuatoren vorzugsweise an einer Ecke der Filterplatte (10) in einer der zwei Seiten der Filterplatte (10) angeordnet ist.

5. Schwingungssystem nach einem der vorhergehenden Ansprüche 1 bis 3, umfassend acht Schwingungsaktuatoren, die außerhalb des Filterbereichs (15) in einem peripheren Teil der Filterplatte (10) angeordnet sind, wobei jeder der acht Schwingungsaktuatoren vorzugsweise an einer Ecke der Filterplatte (10) in beiden der zwei Seiten der Filterplatte (10) angeordnet ist.

6. Schwingungssystem nach einem der vorhergehenden Ansprüche 1 bis 3, umfassend einen einzelnen Schwingungsaktuator (11), der in der Mitte der Filterplatte (10) angeordnet ist, wobei der Schwingungsaktuator (11) elektrische Verbindungen durch die Filterplatte (10) aufweist.

7. Schwingungssystem nach Anspruch 1, wobei die isolierende Schutzschicht (17) aus mindestens einem Keramik-Glas-Verbundstoff, einem Glas oder einem Polymer einer bestimmten Dicke gefertigt ist.

8. Schwingungssystem nach Anspruch 1, umfassend Leiter (22), einschließlich elektrischer Drähte für die elektrischen Verbindungen (21), wobei die Leiter auf der isolierenden Schutzschicht (17) abgeschieden oder darin integriert sind.

9. Schwingungssystem nach Anspruch 1, wobei das Keramikmaterial Aluminiumoxid, Siliziumoxid, Titanoxid, Zirkonoxid oder Kombinationen davon umfasst.

## Revendications

1. Système de vibration pour filtrer des substances, les substances de filtration incluant un fluide et ledit système de vibration comprenant :
- une plaque filtrante (10) constitué d'un matériau poreux céramique, ladite plaque filtrante (10) comprenant deux côtés, un côté supérieur et un côté inférieur ;
- des électrodes (23, 24) ; et
- un boîtier (13),
dans lequel la plaque filtrante (10) est assemblée dans ledit boîtier (13) avec des moyens de serrage (14) assurant un joint hermétique, une périphérie du boîtier (13) délimitant une zone de filtration (15) ;
**caractérisé en ce que** le système de vibration comprend en outre :
- un ou plusieurs actionneurs de vibration (11) physiquement couplés à ladite plaque filtrante (10) et configurés pour entraîner, à travers des interconnexions électriques (21) et à travers lesdites électrodes (23, 24), une tension d'entraînement pour faire vibrer ladite plaque filtrante (10) à une fréquence donnée et pour produire un déplacement dans un plan de ladite plaque filtrante (10) ; et
- une couche protectrice isolante (17) incluant une couche protégée contre les fluides, FPL, qui est déposé sur une zone de la plaque filtrante (10), à l'extérieur du boîtier (13), définissant un motif donné permettant à une certaine zone de la plaque filtrante (10) d'être exclue de la couche protectrice isolante (17), de telle sorte que par un contrôle approprié des processus de dépôt et de durcissement, la couche protectrice isolante (17) puisse avoir une épaisseur et une densité définies qui empêchent le passage de fluide à travers la couche protectrice isolante (17),
dans lequel :
- l'un ou plusieurs actionneurs de vibration (11) sont situés à l'extérieur de ladite zone de filtration (15) sur la couche protectrice isolante (17),
- ladite fréquence donnée est comprise dans une plage comprise entre 100 Hz et 100 kHz, et
- ledit déplacement a une amplitude comprise entre 0,01 et 2 µm.

2. Système de vibration selon la revendication 1,
dans lequel l'un ou plusieurs actionneurs de vibration (11) sont des actionneurs piézoélectriques incluant du titanate zirconate de plomb modifié, PZT ; du titanate de bismuth modifié, BT ; ou du niobate de sodium et potassium modifié, KNN.

3. Système de vibration selon la revendication 2, comprenant des actionneurs piézoélectriques massifs ou à couche épaisse.

4. Système de vibration selon l'une quelconque des revendications précédentes, comprenant quatre actionneurs de vibration situés à l'extérieur de la zone de filtration (15) dans une partie périphérique de la plaque filtrante (10), chacun desdits quatre actionneurs de vibration étant de préférence situé dans un coin de la plaque filtrante (10) dans l'un desdits deux côtés de la plaque filtrante (10).

5. Système de vibration selon l'une quelconque des revendications précédentes 1 à 3, comprenant huit actionneurs de vibration situés à l'extérieur de la zone de filtration (15) dans une partie périphérique de la plaque filtrante (10), chacun desdits huit actionneurs de vibration étant de préférence situé dans un coin de la plaque filtrante (10) dans tous deux desdits deux côtés de la plaque filtrante (10).

6. Système de vibration selon l'une quelconque des revendications précédentes 1 à 3, comprenant un seul actionneur de vibration (11) situé au centre de la plaque filtrante (10), ledit actionneur de vibration (11) ayant des connexions électriques à travers la plaque filtrante (10).

7. Système de vibration selon la revendication 1, dans lequel la couche protectrice isolante (17) est constituée d'au moins un composite céramique-verre, un verre ou un polymère d'une épaisseur donnée.

8. Système de vibration selon la revendication 1, comprenant des conducteurs (22) incluant des fils électriques pour les interconnexions électriques (21), lesdits conducteurs étant déposés sur la couche protectrice isolante (17) ou intégrés dans celle-ci.

9. Système de vibration selon la revendication 1, dans lequel ledit matériau céramique inclut de l'alumine, de la silice, du titane, de la zircone, ou des combinaisons de ceux-ci.
